# EUROPEAN PATENT APPLICATION

(11) **EP 4 163 106 A1**
(43) Date of publication of application: **12.04.2023**
(21) Application number: 22200753.6
(22) Date of filing: 11.10.2022
(51) Int. Cl.: B32B 17/02, B32B 17/06, B32B 17/10, B32B 37/00, B32B 5/02, B32B 5/06, B32B 5/26

(54) **BONDING OF MULTILAYER FIBERGLASS FABRIC WITHOUT STITCHING**

(30) Priority: 11.10.2021 US 202163254530 P
(71) Applicant: Skaps Industries India Pvt Ltd, Ahmedabad 382210 (IN)
(72) Inventor: MASHRUWALA, Tejas, 400007 Mumbai (IN)
(74) Representative: Nordmeyer, Philipp Werner

(57) **Abstract**

Multilayer fibreglass fabric with stitching comprises various stitching processes. These stitching processes not only create poor-surface finish but also it reduces the mechanical strength and increases cost of process and machinery. Therefore, present disclosure proposes a method for bonding of multilayer fiberglass fabric without stitching which comprises: pre-processing (601) wherein a raw material is selected and assembled according to requirement or final product. Processing (602) wherein processes like pressure rolling and needle punching are carried out. Post-processing (603) wherein the output in winded up, cut and packed in pre-determined sizes and dispatched. In present disclosure various combinations of input material are possible according to customer requirements.

## Description

### CROSS-REFERENCE TO RELATED APPLICATIONS AND PRIORITY

The present application claims priority from US provisional Patent Application no. 63/254,530 filed on 11th October, 2021.

### TECHNICAL FIELD

The present subject matter described herein, in general, relates to the field of multilayer reinforced fabrics. More particularly, the present subject matter relates to super finish multilayer fiberglass fabric without visible pattern.

### BACKGROUND

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also correspond to implementations of the claimed technology.

Glass fiber is a material consisting of numerous extremely fine fibers of glass generally termed as glass roving/threads. These roving/threads are generally warp knitted together and converted into a fabric. The roving/thread are fed to warp-knitting machine and each end of the roving/treads are passed through a needle. The knitting elements form loops and bind the warp yarns together. Further polyester yarns are used to stitch the layers together.

Another way of fabricating glass fiber involves needle punching as a nonwoven process by which the fibres are mechanically entangled to produce a nonwoven fabric by repeated penetration of barbed needles through a preformed dry fibrous web. In the process the needle board is mounted on a beam which is given an up and down reciprocating motion by means of an eccentric crank mechanism. As a result, the fibers are mechanically interlocked, thereby providing the mechanical strength.

Further to produce multilayer fabric like Glass Fibre Reinforced Polymer (GFRP), conventionally the Polyester Spun lace Veil would be stitched over a layered fiberglass roving. In accordance with the exemplary prior disclosure the fiberglass fabrics like Chopped Strand Mat (CSM) is stitched together with surface veils, and non-woven core layers using polyester texturized yarn. Since the surface veil is stitched with the glass fibre stitching marks are left on the final product which are visible on closer look. Further stitching process takes additional time after needling process which increases the cycle time, and mechanical strength of product around stitched portions may be poor due to stress concentration adding to fatigue failure and thus reducing lifespan of the product.

Further for better resin infusion it is important to ensure high flowability, less resistance and drag of the materials. These aspects are also important from point of view to better moldability and shaping of glass fibre materials.

From the aesthetic perspective the visibility of the stitching pattern on the GFRP surface impacts the applicability of GFRP where surface finish of the machine or the object is most important for better performance and less resistance and drag due in high speed application for e.g., high end products like super cars, Tanks or Vessels and Pipes, Filament winding profiles, Automotive Parts, Amusement Sector, Wind energy (blades and nacelle covers) etc. matrix and reinforcement.

Thus, there is a long-standing need for an improved process to produce Bonding of Multilayer Fiberglass Fabric without stitching that alleviates the aforementioned-technical challenges/drawbacks.

### SUMMARY

This summary is provided to introduce the concepts related to a process and product enabling super finish for Glass Fibre Reinforced (GFR) by bonding multilayer fiberglass fabric without stitching and the concepts are further described in the detail description. This summary is not intended to identify essential features of the claimed subject matter, nor it is intended to use in determining or limiting the scope of claimed subject matter.

In one implementation process of obtaining a super finished fiberglass fabric is disclosed. The method for the process as disclosed may comprise a selection of first fabrics. Further selecting a second non-woven fabric. Selecting a veil. Further positioning the first fabric, the second non-woven fabric and a veil such that the veil encloses the first fabric and the second fabric. The first fabric, the second non-woven fabric and the veil are fed into a set of rollers, wherein the feeding is done such that all the three fabrics are stretched to have tension. Further needle punching the three layers together enabling entanglement of the threads of the three layers.

In another implementation of the present disclosure a method for bonding multiple layers of non-woven fiberglass fabric without stitching is disclosed. The method comprising step of selecting at least two material from chopped strand mat, veil, woven roving, and/or Polypropylene core, wherein the areal weight of the at least two selected material is in the range of 40 g/m² to 1000g/m². Further mounting a first material on a first roll stand and a second material on a second roll. The first material is selected from veil, Polypropylene core, or chopped strand mat, and second material is selected from chopped strand mat, Polypropylene core, or woven roving. The method as disclosed further comprises punching the at least one first material over the at least one second material using a plurality of needles in the needle punch to bond the material together, wherein the needle punching bonds the multiple layer by mechanical entanglement of the thread.

In another implementation of the present disclosure a method for another exemplary embodiment for bonding multiple layers of non-woven fiberglass fabric without stitching is disclosed. In accordance with the exemplary embodiment at least one first material is mounted on a first roll stand, wherein the at least one first material is selected from veil, Polypropylene core, or chopped strand mat, wherein areal weight of the at least one material is in the range of 40 g/m² to 450g/m². Further in accordance with the embodiment the method comprises mounting at least one second material on a second roll stand. The at least second material is selected from chopped strand mat, Polypropylene core, or woven roving, wherein areal weight of the at least one material is in the range of 180 g/m² to 1000g/m². The at least one first material and the at least one second material is simultaneously fed in to an input roller. The input roller is configured to press together the at least one first material and the at least one second material, and is advanced towards a needle punch. The method further comprises punching the at least one first material over the at least one second material using a plurality of needles in the needle punch to bond the material together, wherein the needle punching bonds the multiple layer by mechanical entanglement of the thread.

### BRIEF DESCRIPTION OF DRAWINGS

The detailed description is described with reference to the accompanying figures. In the Figures, the right-most digit(s) of a reference number identifies the Figure in which the reference number first appears. The same numbers are used throughout the drawings to refer like features and components.
Figure 1 illustrates a process flow of Needle-Punched Fiberglass Reinforcement Fabric 100, in accordance with an embodiment of a present subject matter.
Figure 2 illustrates a process flow of Woven Fabric 200 in accordance with an embodiment of a present subject matter.
Figure 3 illustrates a process flow of Multi Axial Fabric 300 in accordance with an embodiment of a present subject matter.
Figure 4 illustrates a process flow of Non-woven Fabric 400 in accordance with an embodiment of a present subject matter.
Figure 5 illustrates a process flow of Chopped Strand Mat 500 in accordance with an embodiment of a present subject matter.
Figure 6 illustrates a method for bonding of multilayer fiberglass fabric without stitching.

### DETAILED DESCRIPTION

Reference throughout the specification to "various embodiments," "some embodiments," "one embodiment," or "an embodiment" means that a particular feature, structure, or characteristic described in connection with the embodiment is included in at least one embodiment. Thus, appearances of the phrases "in various embodiments," "in some embodiments," "in one embodiment," or "in an embodiment" in places throughout the specification are not necessarily all referring to the same embodiment. Furthermore, the particular features, structures or characteristics may be combined in any suitable manner in one or more embodiments.

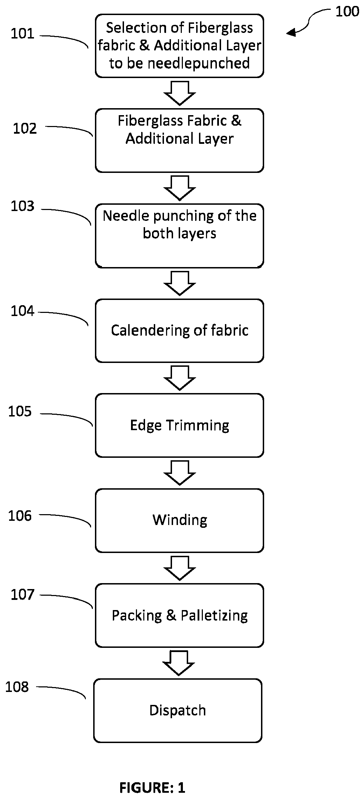

Now, referring to Figure 1, the method (100) for process flow of Needle-Punched Fiberglass Reinforcement Fabric is illustrated, in accordance with an embodiment of the present subject matter. The method (100) for process flow of Needle-Punched Fiberglass Reinforcement Fabric may comprise a step 101 for selection of fabrics to be needle punched. The exemplary embodiment may further comprise a step 102 enabling selecting a first fabric. The first fabric may be a fiberglass fabric. The fiberglass fabric can be knitted, or woven, or stitched. Further at step 102 a second fabric may also be selected and positioned along with the first fabric. The first fabric and the second fabric may further be stretched to have tension. Further at step 103 a plurality of needles may punch through the first fabric and the second fabric. The needle punching of the first fabric and the second fabric in accordance with step 103 may enable entanglement of the threads between the first fabric and second fabric. Further at step 104 once the first fabric and the second fabric are needle punched together, they are calendared together. Further a trimmer machine may be configured to trim the edges of the needle punched fabric at step 105. At step 106, the finished needle punched fabric or the GFR is winded or rolled up us a Winder. At step 107 and step 108 the GFR is packed, pelletized and dispatched.

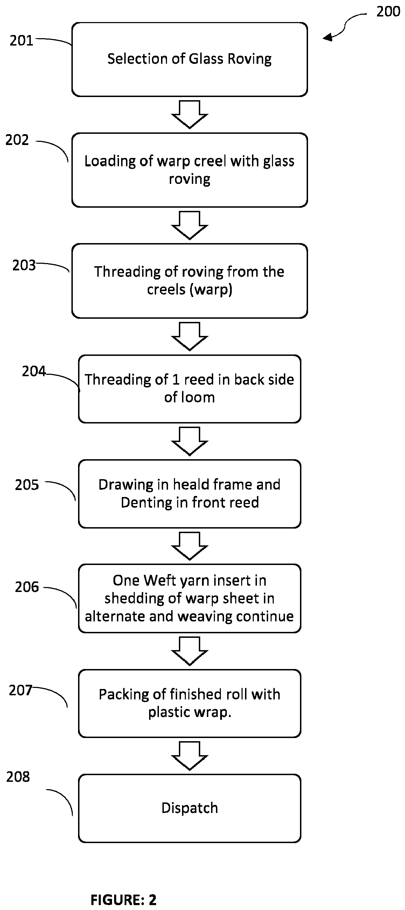

Now, referring to figure 2 the method (200) discloses process flow of Woven Fabric may comprise Selection of Glass Roving based on requirements at step 201. Further, warp creel with glass roving may be loaded at step 202. Further, threading of warp roving from the creels is carried out at step 203. Further, threading of 1 reed in back side of loom is carried out at step 204. Further, drawing process may be carried out in Heald frame and Denting process in front reed may be carried out at step 205. Further, One Weft yarn may be inserted in shedding of warp sheet in alternate manner and weaving may be continued at step 206. Further, packing process of finished roll with plastic wrap may be carried out at step 207 and fabric may be dispatched at step 208.

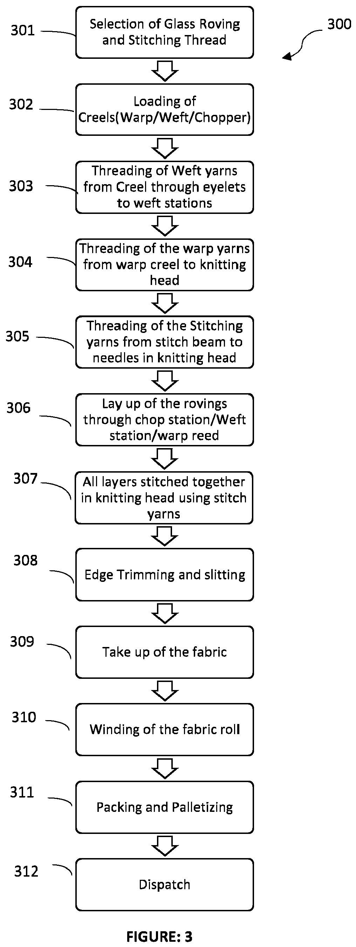

Now, referring to figure 3 the method (300) discloses process flow of Multi Axial Fabric may comprise Selection of Glass Roving and Stitching Thread at step 301. Further, Loading of Creels (Warp/Weft/Chopper) at step 302. Further, a Threading process of Weft yarns from Creel through eyelets to weft stations at step 303. Further, a Threading process of the warp yarns from warp creel to a knitting head at step 304. Further, a threading process of the Stitching yarns from stitch beam to needles in the knitting head at step 305. Further, a Laying up process of the rovings through chop station or Weft station or warp reed at step 306. Further all layers are stitched together in the knitting head using stitch yarns at step 307. Further trimmer is used for Edge Trimming and slitting of fabric at step 308. Further the fabric is Taken up at step 309, winder winds the fabric roll at step 310, further Packing and Palletizing of fabric is carried out at step 311 and finally fabric is moved for Dispatch at step 312.

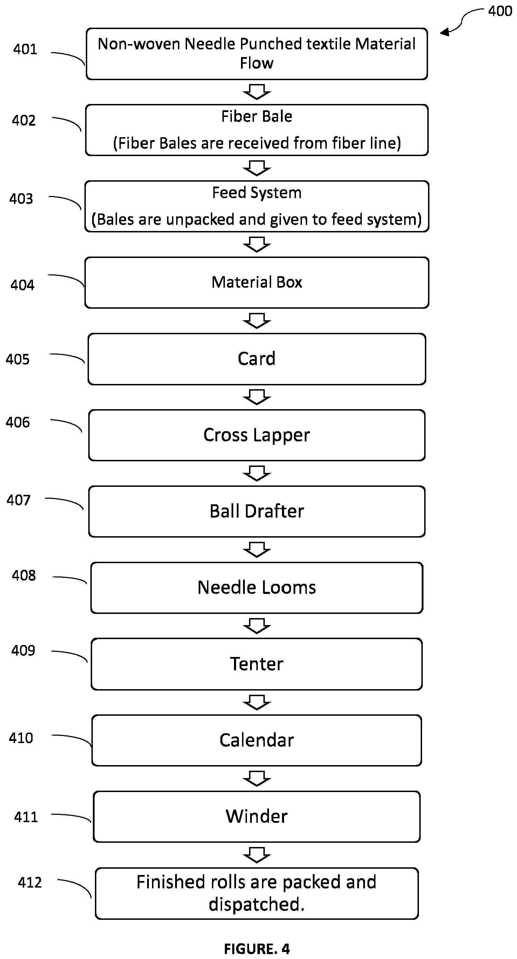

Now, referring to figure 4 the method (400) discloses a process flow for producing Non-woven Fabric (Poly Propylene core and veil), where a flow of Non-woven Needle Punched material at step 401. Further Fiber Bale (Fiber Bales are received from fiber line) at step 402 are loaded on creels. Further, Feeding System where Bales are unpacked and given to feed system at step 403. Further, A Material box at step 404 which supplies material to carding machine. Further, a Carding machine at step 405 which to remove impurities to blend the raw material further to reduce the blend to a web of fibers and to divide it up into rovings of the required count. Further, Cross Lapper at step 406 machine which cross laps the feed received from carding machine. Further a Ball Drafter at step 407 processes the fabric. Further, Needle looms for needling at step 408. Further, tenter is used for drying or additional treatments 409. Further, Calendar rolls are used for calendaring of fabric at step 410, Winder for winding of fabric at step 411. Further, finished rolls are packed and dispatched at step 412.

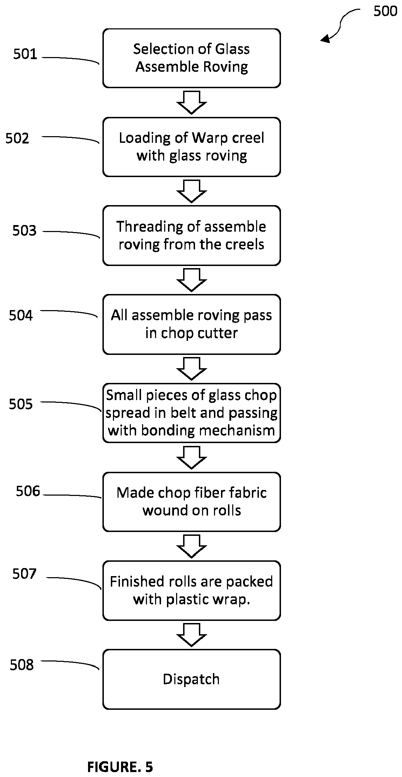

Now, referring to figure 5 the method (500) discloses a process flow of Chopped Strand Mat comprising, Glass assemble roving is selected at step 501. Further, warp creel with glass roving is loaded at step 502. Further, threading of assemble roving from the creels is carried out at step 503. Further, all assemble roving may be passed in chop cutter at step504. Further, Small pieces of glass chop may be spread in belt and bonding mechanism may be passed over it at step 505. Further, chopped fiber fabric may be wound on rolls at step 506. Further, finished rolls are packed with plastic wrap at step 507 and final product may be moved for Dispatch at step 508.

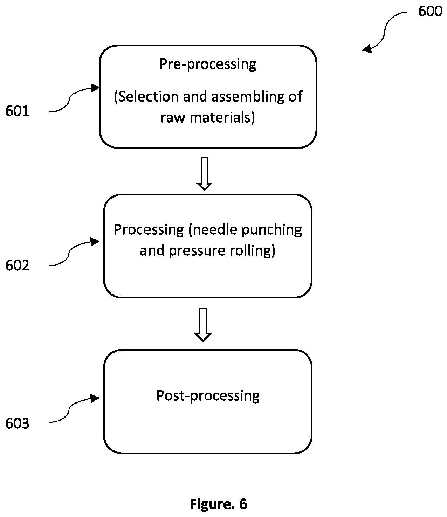

Now, referring to figure 6 a method (600) for bonding of multilayer fiberglass fabric without stitching comprising, pre-processing (601) which may further comprise selection of input material on the processing line selection of various fabric layers or combination of fabric layers in various sequences, wherein areal weight of fabrics varies from 40g/m² to 1000g/m². Material selected may be at least two material from chopped strand mat, veil, woven roving, and/or Polypropylene core. Further, mounting a first material may be on a first roll stand and a second material may be on a second roll, wherein the first material is selected from veil, Polypropylene core, or chopped strand mat, and second material is selected from chopped strand mat, Polypropylene core, or woven roving. Further, assembling of various fabric layers as per requirement of final product. Further, processing (602) which may comprise press rolling which may further comprise Processing (602), wherein the processing may comprise the combination of layers of woven or non-woven fabrics and veils to be processed at set of processing stations. The set of processing stations may comprises a set of pressure rollers, wherein the pressure rollers at input and output of the processing (602) step are configured to run at various speeds and maintain tension in the layers under process and maintain required amount of draft according to need to final product and line speed is maintained between 3.6 to 8.7 meter/min and draft is maintained between -5% to -10%, a needle punching station, wherein a needle punching process is carried out using a set of needle boards configured to perforate through the combination of layers, and punching density is maintained between 80 to 230 stock/min. and number of needle boards are maintained between 1 to 4, wherein punching speed is maintained between 406 to 586 RPM; Post-processing **(603),** wherein the final output is post-processed according to requirements.

In one embodiment the method (600) may comprise post- processing (603) which may further comprise processes such as winding, in which the output product may be winded either manually or automatically. further, the post processing (603) may involve packing and palletizing which may comprise that the processed output from the processing (602) step is packed and palletized in accordance with quality requirements. Further, the post-processing (603) may comprise dispatching, wherein the final product is dispatched at delivery station.

In another embodiment of method (600), raw materials may be Polyester veil with areal weight 40 GSM and Chopped Strand Mat (CSM) with areal weight 450 GSM. Therefore, total areal weight is 490 GSM. First, polyester veil may be loaded and set in first roll stand.

Next, CSM may be loaded and set in second roll stand. Further, layer sequence may be maintained as follows:
1^{st} layer: Polyester Veil (tolerance +/- 5%)
2^{nd} layer: CSM (tolerance +/-10%)

Further, both layer insert in top and bottom input roller for process. Further, needle punching at top input side needle board and top output side needle board may be started. Further, both bottom needle board may be stationary. Here, needle number 36 may be used and 2 punching boards may be working in single side at top. Further, draft may be maintained around -5% between input roller and output roller. Further, single side needle punching may be carried out at single side rpm 586. Further, punching density may be maintained at 230 stock/min maintained. Further, line speed at 3.6 meter/min is maintained. Further, both of two layers may bind by needle punch. After the process is completed manual winding may be done to wind the product. Further, winded rolls may be edge cut by slitter machine while maintaining width of rolls 1250 MM or any desired size . Further, finished rolls are packed with roll number, batch number and wrapped in plastic. Further, finished rolls are ready for dispatch.

In another embodiment of method (600), raw materials may be Polypropylene core (PP core) with areal weight 180 GSM core and Chopped Strand Mat (CSM) with areal weight 450 GSM. Further, Polypropylene core may be loaded first set in first roll stand. Therefore, total areal weight is 630 GSM. Next, CSM may be loaded set in second roll stand. Further, Layer sequence may be maintained as follows;
1^{st} layer: PP CORE (tolerance +/-10%),
2^{nd} layer: CSM (tolerance +/-10%),

Further, two layers may be insert in first top and bottom input roller for process. Further, top input side needle board punching may be started and bottom input side needle board may be stationary. Further, at output side top and bottom needle boards may be stationary. Here needle number 36 may be used and 1 needle board punching at top single side is working. Further, draft may be maintained at -10 % between input roller and output roller. Further, needle punching on single side is at 406 RPM. Further, punching density may be maintained at 80 stock/min. Further, line speed may be maintained at 7.1 meter/min. Further, both the two layers are binding by needle punch. After the process is completed manual winding may be carried out. Further, winded rolls may be edge cut by slitter machine with rolls width 1250 MM or any desired size. Further, finished rolls are packed with roll number, batch number and plastic wrap. Finally, the finished rolls are ready for dispatch.

In yet another embodiment of method (600), raw materials at input may be Chopped Strand Mat (CSM) with areal weight 450 GSM and polypropylene core (PP core) with areal weight 180 GSM and another Chopped Strand Mat (CSM) with areal weight 450 GSM. Therefore, total areal weight is 1080 GSM. Further, tolerance may be maintained at +/_10%. Initially, first Chopped Strand Mat (CSM) may be loaded and set in first roll stand. Next, polypropylene core may be loaded and set in second roll stand. Further, CSM may be loaded and set in third roll stand. Further, layer sequence may be maintained as follows:
1^{st} layer CSM (tolerance +/-10%),
2^{nd} layer PP core (tolerance +/-10%),
3^{rd} layer CSM (tolerance +/-10%).

Further, all three layers may be inserted in first top and bottom input roller for process. Further, punching may start at top input side needle board and bottom input put side needle board. Both output needle boards may be stationary. Here, needle number 36 may be used and 2 needle boards may be used for punching on both side. Further, draft maintain (-10 %) between input roller and output roller. Further, needle punching speed on single side may be maintained at 496 RPM. Further, punching density may be maintained at 80 stock/min. Further, line speed 8.7 meter/min. Further, all three layers may be binding by needle punch. After completion of the process by manual winding may be carried out. Further, winded rolls may be edge cut by the slitter machine with rolls width of 1250 MM or any desired size. Further, finished rolls may be packed with roll number, batch number and plastic wrap. Finally, finished rolls are ready for dispatch.

In another embodiment of method (600), raw materials may be Chopped Strand Mat (CSM) with areal weight 450 GSM, Polypropylene core (PP core) with areal weight 180 GSM, and Woven Roving with areal weight 832 GSM. Therefore, total areal weight is 1462 GSM. Further, CSM is loaded first set in first roll stand. Next, Polypropylene core (PP core) is loaded and set in second roll stand. Further, loading third Woven Roving 832 GSM set in third roll stand. Further, the layer sequence may be maintained as follows
1^{st} layer: CSM (tolerance +/-10%),
2^{nd} layer: PP core (tolerance +/-10%),
3^{rd} layer: Woven roving (tolerance +/-5%).

Further, all three Layer insert in first top and bottom input roller for process. Further, top input, bottom input and top output, bottom output side needle board punching start. All needle board are working. Here, needle number 36 may be used and 4 needle boards may be used for punching on both sides. Further, draft may be maintained at -5% between input roller and output roller. Further, on both side needle punching is done at 582 RPM. Further, punching density may be maintained at 120 stock/min. Further, line speed may be maintained at 4.5 meter/min. Further, all three layers are binding by needle punch. After the process completed the manual winding may be. Further, winded rolls may be edge cut by slitter machine with rolls width at 1250 MM or any size desired. Further, finish rolls are packed with roll number, batch number and plastic wrap. Finally, the final product is ready for dispatch.

Now, in one embodiment of method (600) raw materials at input may be Chopped Strand Mat (here onwards CSM) with areal weight 450 Gram per square meter (here onwards GSM) and Woven Roving with areal weight 832 GSM. Therefore, total areal weight is 1282 GSM. First, the Chopped Strand Mat (CSM) may be loaded and set in first roll stand. Next, Woven Roving may be loaded and set in second roll stand.

Further, layer sequence may be maintained as follows:
1^{st} layer: CSM (tolerance +/-10%),
2^{nd} layer: Woven Roving (tolerance +/-5%).

Further, above two layers may be inserted in first top and bottom input roller for processing. Further, needle punching may start at top input, bottom input and top output, bottom output sides by needle boards. Further, it is ensured that all needle boards are working. Here, needle number 36 may be used and 4 needle boards are needle punching on both sides. Further, draft may be maintained around -5 % between input roller and output roller. Further, needle punching may be carried out at both sides speed of 412 rpm. Further, punching density may be maintained at 120 stock/min. Further, line speed may be maintained at 4.8 meter/min. Further, two layers are binding by needle punching. After the process is completed manual winding may be carried out. Further, rolls edge may be cut by slitter machine with rolls width of 1250 mm or any desired size. Further, finished rolls may be packed with roll number, batch number and plastic wrap. Further, the finished rolls may be ready for dispatch.

In all the embodiments explained above needles mounted on needle board. Each needle may be of specific dimension like diameter, height and number of barbs for example. A needle number 36 may have following dimensions may have 0.7 MM thickness and 6 number of barbs and 3 inch height. Further, each needle board may comprise 15000 or more needles depending on requirements by clients. Further, in all above embodiments bonding mechanisms may be mechanical or chemical or solvent based or resin based bonding agents which may be reactive or non-reactive in nature. Reactive bonding agent may be chemicals which undergo reactions upon bonding with it's constituents or the fabric layers and non-reactive bonding agents may be those which do not react with it's constituents or with the fabric they are interacting with.

In all the embodiments explained above the width of rolls may vary from 0.5 meters to 2.5 meters or any desired size as per requirements of clients.

The embodiments illustrated, especially related to the production of GFRP has following advantages:
- The absence of stitches improves the surface finish of the final part.
- No requirement of adhesive coatings.
- Aesthetic and artistic finish can be given which is important especially in automotive and construction sectors.
- The cycle time producing final product is substantially reduced.
- The mechanical strength of final product is increased substantially.
- The cost of lamination of GFRP product is reduced.
- The Life cycle of GFRP is improved.

The foregoing description shall be interpreted as illustrative and not in any limiting sense. A person of ordinary skill in the art would understand that certain modifications could come within the scope of this disclosure. For limiting the scope of the invention, a subsequent Complete Specification will be filed to determine the true scope and content of this disclosure.

## Claims

1. A method (600) for bonding multiple layers of non-woven fiberglass fabric without stitching, the method comprising:
selecting at least two material from chopped strand mat, veil, woven roving, and/or Polypropylene core, wherein the areal weight of the at least two selected material is in the range of 40 g/m² to 1000g/m²;
mounting a first material on a first roll stand and a second material on a second roll , wherein the first material is selected from veil, Polypropylene core, or chopped strand mat, and second material is selected from chopped strand mat, Polypropylene core, or woven roving;
simultaneously feeding the first material and the second material to an input roller, wherein the input roller is configured to press together the first material and the at least one second material, and is advanced towards a needle punch; and
punching the at least one first material over the at least one second material using a plurality of needles in the needle punch to bond the material together, wherein the needle punching bonds the multiple layer by mechanical entanglement of the thread.

2. The method as claimed in claim 1, further comprises maintaining a draft of between the input roller and an out roller, wherein the draft is maintained in a range of -5 % to -10%.

3. The method as claimed in claim 1, further comprises maintaining line speed between the input roller and output roller in a range of 3.6 meter/min to 8.7 meter/min.

4. The method as claimed in claim 1, wherein the bond between various layers is ensured by using various bonding mechanisms comprising mechanical or chemical or solvent based mechanisms.

5. The method as claimed in claim 1 further comprises, selecting at least one third material from Polypropylene core, or woven roving, wherein the areal weight is 180 g/m² and 1000g/m² respectively.

6. The method as claimed in claim 4, further comprises positioning the at least one third material below the at least one first material and at least one second material.

7. A method (600) for bonding multiple layers of non-woven fiberglass fabric without stitching, the method comprising:
mounting at least one first material on a first roll stand, wherein the at least one first material is selected from veil, Polypropylene core, or chopped strand mat, wherein areal weight of the at least one material is in the range of 40 g/m² to 450g/m²;
mounting at least one second material on a second roll stand, wherein the at least second material is selected from chopped strand mat, Polypropylene core, or woven roving, wherein areal weight of the at least one material is in the range of 180 g/m² to 1000g/m²;
simultaneously feeding the at least one first material and the at least one second material to an input roller, wherein the input roller is configured to press together the at least one first material and the at least one second material, and is advanced towards a needle punch; and
punching the at least one first material over the at least one second material using a plurality of needles in the needle punch to bond the material together, wherein the needle punching bonds the multiple layer by mechanical entanglement of the thread.

8. The method as claimed in claim 6, further comprises maintaining a draft of between the input roller and an out roller, wherein the draft is maintained in a range of -5 % to -10%.

9. The method as claimed in claim 6, further comprises maintaining line speed between the input roller and output roller in a range of 3.6 meter/min to 8.7 meter/min.

10. The method as claimed in claim 6 further comprises, selecting at least one third material from Polypropylene core, or woven roving, wherein the areal weight is 180 g/m² and 1000g/m² respectively.

11. The method as claimed in claim 9, further comprises positioning the at least one third material below the at least one first material and at least one second material.
